(19) Europäisches Patentamt
European Patent Office
Office européen des brevets

(11) Publication number : **0 326 559 B1**

(12) # EUROPEAN PATENT SPECIFICATION

(45) Date of publication of patent specification : **06.05.92 Bulletin 92/19**

(51) Int. Cl.$^5$ : **H04M 3/42,** H04Q 11/04

(21) Application number : **87905951.7**

(22) Date of filing : **09.09.87**

(86) International application number : **PCT/EP87/00522**

(87) International publication number : **WO 88/02205 24.03.88 Gazette 88/07**

(54) **COMMUNICATION SYSTEM.**

(30) Priority : **12.09.86 BE 2061051**

(43) Date of publication of application : **09.08.89 Bulletin 89/32**

(45) Publication of the grant of the patent : **06.05.92 Bulletin 92/19**

(84) Designated Contracting States : **DE FR GB IT**

(56) References cited :
**EP-A- 0 123 890**
**Electrical Communication, volume 60, no. 1, 1986, (Harlow, Essex, GB), P. Debuysscher et al.: "Intelligent networktermination", pages 58-62**
**Philips Telecommunication Review, volume 43, no. 2, June 1985, (Hilversum, NL), - M.B. Geelhoed et al.: "SOPHO S2500, thehigh-range communication switch", pages 92-113**

(73) Proprietor : **ALCATEL N.V.**
**Strawinskylaan 537 (World Trade Center)**
**NL-1077 XX Amsterdam (NL)**

(72) Inventor : **DECUYPERE, Hubert, Jerôme, Martin**
**O.L. Vrouwstraat 122**
**B-2750 Beveren (BE)**
Inventor : **VAN DURME, Luc**
**Scheldekaai 6**
**B-9200 Wetteren (BE)**
Inventor : **DE BLOCHOUSE, Marc, Lucien, Maria**
**Hector Henneaustraat 88**
**B-1930 Zaventem (BE)**
Inventor : **DE BIE, Ludovicus, Dimphna**
**Veldenstraat 15**
**B-2800 Mechelen (BE)**
Inventor : **PEETERS, Hugo, Jan, Philemon**
**Leopoldslei 113**
**B-2130 Brasschaat (BE)**

(74) Representative : **Vermeersch, Robert et al**
**BELL TELEPHONE MANUFACTURING COMPANY Naamloze Vennootschap Patent Department Francis Wellesplein 1**
**B-2000 Antwerp (BE)**

**EP 0 326 559 B1**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a communication system including a switching network with a plurality of terminals to which communication devices, at the availability of users, may be connected, and control means which are able to control the establishment of connections between said devices and to store in a data base information linking a user identity with a network terminal identity.

Such a communication system is well known in the art, for instance from the introduction of Belgian patent No 680 193. Therein a telephone system is described which has the advantage that a user may keep the same telephone number, i.e. its user identity, when he changes place and makes use of the subset which is available at this location. This is possible because in the data base the information stored is changes in such a way that the telephone number is now linked with the identity of the network terminal to which this subset is connected. Such a system is for instance the RITA system which is used for military purposes.

An object of the present invention is to provide a communication system of the above type having the same advantage as the known system, but which is moreover indicated to be used in an environment wherein the displacement of a device is easy.

According to the invention, this object is achieved due to the fact that said devices each have an own identity and that said control means are able to store in said data base information linking the identity of a device directly to a terminal identity and to adapt said information to a modified location of said device.

In this case, again when a telephone system is considered, a user not only uses the same telephone number but also the same subset. Indeed, upon a change of location of the subset the link between the identity of the subset and that of the network terminal to which it is connected is changed. Because upon the occurrence of a change of place of a user its device is also displaced the present system is particularly useful where such a device displacement is easy, e.g. in PABX.

Another characteristic of the present communication system is that said control means are able to store in said data base second information linking a user identity directly with at least one device identity.

The above mentioned and other objects and features of the invention will become more apparent and the invention itself will be best understood by referring to the following description of an embodiment taken in conjunction with the accompanying drawings wherein :

Fig. 1 shows a communication system according to the invention;

Fig. 2 represents data bases stored in the memory circuits of the communication system of Fig. 1 in relative detail;

Figs. 3 and 4 illustrate how these various data bases are updated after a device B2 has been displaced from node N2 to node N3 or when it has started a communication after such a displacement;

Fig. 5 shows how these various data bases are updated after a destination device B2 has been displaced from line L3 of node N2 to line L5 of the same node;

Fig. 6 to 8 illustrate how these various data bases are updated after a destination device B2 has been displaced from node N2 to node N3;

Figs. 9 to 11 illustrate how the various data bases are updated upon a device B2 being newly connected to the system.

The communication system represented in Fig. 1 includes three nodes N1 to N3 which are each constituted by a Private Automatic Branch Exchange or PABX. Each of these nodes N1/3 includes a switching network SNN1/3 and control means constituted by a computer COMPN1/3 comprising a processor PRN1/3 and an associated memory MEMN1/3, the computer and the switching network being interconnected by a bus BN1/3. The switching networks SNN1/3 are interconnected by communication links CL1/3 and a plurality of devices, such as telephone subsets, telefax devices, personal computers, etc. are connected to these switching networks via communication lines. Each of these devices includes a computer comprising a processor and a memory and these devices are moreover associated to a number of users. For instance :

- a telephone subset A1 and a telefax device A2 which are assigned to a user A are connected to the switching network SNN1 of node N1 through communication lines L1 and L2 respectively;
- a telephone subset B1 and a telefax device B2 which are assigned to a user B are connected to the switching network SNN2 of node N2 through a common communication lines L3;
- no device is supposed to be connected to communication line L4 of node N3.

The device A1, A2, B1, B2 include the computers COMPA1, COMPA2, COMPB1, COMPB2, comprising the processors PRA1, PRA2, PRB1, PRB2 and the memories MEMA1, MEMA2, MEMB1, MEMB2 respectively.

Reference is now made to Fig. 2. Each of the memories MEMN1 to MEMN3 of the nodes N1 to N3 includes a data base, DBN1 to DBN3 respectively, storing information about all the devices and users of the system. More particularly, each data base includes :

- for each device, a data table or so-called device object and an associated device object programme;
- for each user, a data table or so-called user object and an associated user object programme;
- a data base menagement programme.

More particularly, each of the data bases of the nodes N1 to N3 includes device objects DOA1, DOA2, DOB1, DOB2, user objects UOA and UOB, a device object programme DOP, a user object programme DBMP. These references are followed by (N1), (N2) or (N3) depending on the node wherein they are located.

To be noted that, in case the data bases are fully updated, for each device connected to a node and for each user associated to this node, i.e. for each user assigned to devices connected to this node, the corresponding device and user objects forming part of the data base of this node contain the complete data for this device and user respectively. On the contrary, for each device not connected to a particular node and for each user not associated to this node the corresponding device and user objects forming part of the data base of this node normally contain only data referring to the node where the complete information can be found. This will become clear from the following description of these objects.

Device object DOA1 (N1) stores :
- the identity A1 of the device;
- the device location, i.e. the identity L1 of the line by which the device A1 is connected to node N1;
- the identity A of the user of device A1;
- device object data DODA1 characterizing the device A1, e.g. data specifying that this device provides telephone service.

The device objects DOA1 (N2) and DOA1 (N3) only store the identity A1 the device and the identity N1 of the node to which the device A1 is connected. The other device objects DOA2 (N1), DOA2 (N2), DOA2 (N3), DOB1 (N1), DOB1 (N2), DOB1 (N3), DOB2 (N1), DOB2 (N2) and DOB2 (N3) are built-up in a similar way as the device objects considered above.

User object UOA (N1) stores :
- the identity A of the user;
- the identity N1 of the node in which the complete user object is stored;
- the service S1 (telephone) and S2 (telefax) assigned to the user A and the identities A1 and A2 of the devices providing these services;
- user object data UODA characterizing the user A.

These data, for instance, define the set of privileges and restrictions of the user

The user objects UOA (N2) and UOA (N3) only store the identity A of the user and the identity N1 of the node to which user A is associated. The other user objects UOB (N1), UOB (N2) and UOB (N3) are built-up in a similar way as the user objects considered previously.

In connection with the above, it should be noted that none of the device objects and user objects included in the data base of node N3 is complets since in the embodiment shown no device is connected to this node.

The purpose of the device object programme DOP, the user object programme UOP and the data base management programme DBMP included in the data base of each node will become clear later.

Each of the memories MEMA1, MEMA2, MEMB1 and MEMB2 of the devices A1, A2, B1 and B2 includes a data base DBA1, DBA2, DBB1 and DBB2 respectively. These data bases each store :
- device data (DA1, DA2, DB1, DB2) characterizing the device. These data for instance include the device identity A1, A2, B1, B2;
- a device programme (PA1, PA2, PB1, PB2) the purpose of which will also become clear later.

From the above, it follows that :
- a user object mainly stores the link between a user identity and one or more device identities. This link is normally not changed;
- a device object mainly stores the link between a device identity and a network terminal identity or line identity. Because each device has an identity this linkage is not absolutely necessary for the establishment of a communication path. However, it increases the speed of searching a device and it also allows to easily detect a change of location of a device.

As will be described hereinafter, when the location of a device in the network of the system is changed, i.e. when a device is connected to another communication line of a same or different node, this change of location will be automatically communicated to this node either immediately after the device has been connected to the node or - after it has been connected to the node - when it is involved in the setting up of a communication path by means of a path set-up message. In the latter case, the operation of the system is slightly different when the displaced device is the originating device of a path set-up message than when this device is the destination of such a message. To be noted that in the following no change is supposed to occur in the allocation of device to users.

Making reference to Fig. 3, it is now assumed that telephone subset B2 is disconnected from communication line L3 of node N2 and is now instead connected to the other node N3 via communication line 4. When this happens, a number of operation steps according to the CCITT Recommendations Q920 and Q921 are performed in the telephone subset B2 and in the node N3. These steps are executed under the control of the device programme PB2 included in the data base DBB2 of B2 and of the data base management programme DBMP included in the data base DBN3 of node N3. More particularly, B2 requests N3 to grant it a Terminal Endpoint Identifier or TEI and N3 communicates this TEI to B2 where it is stored in the data part DB2 of the data base DBB2 thereof. The identifier TEI granted is afterwards used in every communication between the node N3 and the device B2. To be noted that TEI is the level 2 or data link level identity of the device B2, whereas the above mentioned identity B2 is the level 3 or network identity of this device. Level 1 is the physical level.

The above change of location of device B2 is automatically detected by the control means of the system either, according to a first solution, following the execution of the last mentioned steps or, according to a second solution, when this device is involved in the set-up of a communication path i.e. when it generates a communication path set-up message or when it is the destination of such a message.

A will become clear from the following description or both solutions, the change of location of a device is detected in a node when the latter finds a discrepancy between the device/line/node information collected from a line, on the one hand, and the corresponding device/line/node information stored in the data base, on the other hand. This information may also be absent.

According to the above mentioned first solution, the above mentioned steps are followed by the transmission of a message UI from device B2 to node N3 under the control of the device programme PB2. This message includes the following data :

- the above mentioned level 2 identity TEI of B2;
- a so-called Service Access Point Identifier or SAPI which indicates that the message is to be processed by the data base menagement programme DBMP of node N3;
- the level 3 identity B2 of device B2.

Because this message is received in node N3 on line L4 the device/line/node information collected by N3 is B2/L4/N3.

Upon receipt of this message, the following steps are performed in node N3 under the control of the data base management programme DBMP stored in the memories of the nodes :

- the device object DOB2 (N3) is found in data base DBN3 by means of the device identity B2 included in the message and the information B2, N2 stored herein is read. As there is a discrepancy between this data base information and the information B2/L4/N3 collected, it is deduced therefrom that a change of location of the device B2 has taken place and that the complete device object for device B2 is stored in the data base DBN2 of N2;
- device object DOB2 (N2) is therefore read from the data base DBN2 od node N2 via link CL2 and used in the node N3 to update and complete the corresponding device object DOB2 (N3). As a consequence DOB2 (N3) finally stores B2, L4, B and DODB2;
- because the user is B, the user object UOB (N2) is read from the data base DBN2 of node N2 via link CL2 and used in the node N3 to update and complete the corresponding user object UOB (N3). As a result UOB (N3) finally stores B; N3; S1, B2; S2, B1 and UODB.
- finally, and as shown in Fig. 4, the device objects DOB2 (N1) and DOB2 (N2) in the nodes N1 and N2 are updated and modified via communication links CL3 and CL2 respectively.

In this way, all the data bases of the nodes of the system are adapted to the change of location of device B2 and after this change has been detected by the node N3 to which the displaced device B2 is newly connected.

According to the above mentioned second solution, the system operates as follows when a change of location of a device occurs.

The execution of the above programme is stopped after a level 2 identifier TEI has been granted to the displace device. The data bases of the nodes are then not updated so that the location of the displaced device stored therein is not exact. In this case, the updating operation is only performed when a communication path SETUP message involving the displaced device is generated. This message is generated under the control of the device programme and by making use of the device data, when a device is operated, by a calling user e.g. when a telephone is hooked-off and the identity of a destination user is dialled by the calling user. The SETUP message which is then generated includes the following data :

- the identity of the device originating the message;
- the identity of the user of destination;
- the service wanted by the calling user, e.g. telephone.

Different cases may now be considered since the displaced device may either be the one which originates the SETUP message or the device for which the message is intended. The latter device is determined from the contents of the user object, i.e. by the user identity and the service wanted.

In a first case of the second solution, also shown in Figs. 2 to 4 the displaced device B2 is supposed to be the one which originates a communication path SETUP message towards user A. This message includes the followings data :

- the identity of the calling subset B2;
- the identity A of the destination user;
- the telephone service S1 wanted.

Upon receipt of this message in the node N3, the data base management programme DBMP thereof detects the change of location of the device B2. Afterwards and in a similar way as described above for the first solution, the data bases of the system are updated to the change of location of devices B2. To be noted that in the SETUP message, the user identity B is substituted for the device identity B2 under the control of the user and device object programme.

After the updated operation has been accomplished the destination user identity A and the service information S1 included in the path set-up message are used to establish a path between the telephone subset B2 of node N3 and the telephone subset A1 of node N1. Indeed, by means of A one finds in the user object UOA (N3) of N3 that the complete user object UOA (N1) is to be found in the data base of node N1 (Fig. 2). In the latter user object, one finds that the service S1 is provided by the telephone subset A1 of user A and therefore the SETUP message finally supplied to the device A1 includes the information B, A1 and S1.

In the above described examples, the device B2 was supposed to be displaced from node N2 to node N3. In case it is connected to another line than L3 of the node N2, the updated operation is much simpler since only in data base DBN2 the location of B2 has to be changed.

In a second case of the above mentioned second solution according to which the data base updating operation is performed after the generation of a SETUP message, the displaced device B2 is assumed to be the destination device to which this message has finally to be transmitted.

Supposing that this message is originated by user A of device A1 and that the desired service is S1, the SETUP message finally transmitted to B2 includes the following information :

- the identity A of the calling user;
- the identity B2 of the destination device;
- the service S1 wanted.

In this second case, two subcases may be considered depending on the displaced destination device B2 being connected to the same node as previously or to another node.

Reference is first made to Fig. 5 wherein the destination device B2 which was previously connected to line L3 of node N2, as shown in Fig. 3, has been displaced and connected to line L5 of the same node N2, and the device object DOB2 (N2) in this node N2 has not yet been adapted to the new situation. In this case, node N2 transmits the last mentioned SETUP message on communication line L3 since the device object DOB2 (N2) indicates that L3 is the location of B2. However, since B2 has been displaced, no reply to this message is received in node N2. From the absence of reply, node N2 deduces that B2 is not present on line L3. In other words, the collected information B2/L3/N2 is not correct so that there is a discrepancy between this information and the information B2/L3/N2 stored in the data base. It is deduced therefrom that a change of location of a device has taken place and to be able to update the data bases this device is searched. To this end, the node N2 transmits the last mentioned SETUP message on all the other lines, such as L5, connected to it. Because the displaced device B2 is now connected to the latter line L5 a reply will be received therein. As a consequence, node N2 modifies its data base by writing the correct location L5 of B2 in the device object DOB2 (N2). The other nodes need not be informed since the displaced device B2 is still connected to the same node N2 as before.

From the above it follows that when a destination device has been displaced in the same node this change of location is detected by this node after a local search action.

Reference is now made to Figs. 6 to 8, wherein the above destination device B2 which was previously connected to line L3 of node N2, as shown in Fig. 3, has been displaced and connected to line L4 of another node N3, and the device object DOB2 (N1), DOB2 (N2) and DOB (N3) in the nodes have not yet been adapted to the new situation. In the same way as described above in relation to Fig. 5, the SETUP message is applied to all the lines of node N2. However, because the displaced device B2 is now connected to line L4 of node N3, the node N2 will receive no reply from these lines. As a consequence and as shown in Fig. 6 node N2 then informs via communication link CL1 node N1 to which the calling device A1 is connected that the device B2 is not connected to node N2. As shown in Fig. 7, the node N1 then sends the SETUP message to all the nodes, except N2 and in each of these noes it is transmitted on all the lines connected to this node. In the present case, the node N3 more particularly transmits this message via line L4 to device B2 which then replies to this message. In this way, the location of device B2 has been determined. The node N3 then reads in its DOB2 (N3) and UOB2 (N3) that complete information may be found in DOB2 (N2) and UOB2 (N2) of node N2 and by means of this information it updates and modifies its device and user objects DOB2 (N3) and UOB2 (N3). It also transmits the change to the other nodes N1 and N2 in order to update the device objects DOB2 (N1) and DOB2 (N2) thereof. This is shown in Fig. 8.

From the above it follows that when a destination device has been displaced to another node, this changed location is detected by the latter node after a search action, first by the node from which the destination device was removed and then by all nodes, except the last mentioned one.

From the above given description, it follows that the change of location of a device is detected when the data base management programme of a node finds a discrepancy between the device/line/node information collected from the line and the corresponding information stored in the data base of this node, that this displaced device is then searched for and that after the displaced device has been found its change of location is communicated to the system by updating the data bases thereof.

It is also clear from the above that the identities, neither of the devices nor of the users are affected when the location of a device is changed. By providing separate user objects and device objects a high flexibility with respect to the relation between users and devices is obtained. For instance, a plurality of devices may be assigned to a same user and/or a plurality of users may use a same device.

In the above described communication system, such as shown in Fig. 2, the data of the various data bases are supposed to have been loaded therein under the control of an operator. Instead, at least part of these data may be loaded automatically. This is described hereinafter by making reference to Figs. 9 to 11 wherein it is supposed that a device B2 is connected to the system for the first time. Also in this case the presence of his device will be detected by he control means in a way similar to that described above for a changed position.

Fig. 9 shows a communication system which is similar to the one of Fig. 2. However, only two devices A1 and A2 are connected to node N1 via the respective lines L1 and L2 therefore the data bases of the nodes N1 to N3 only include a user object UOA and two device objects DOA1 and DOA2 storing the data shown.

It is now supposed, as shown in Fig. 10, that a device B2 is newly connected to line L3 of node N2. In a similar way, as described above, the node N2, under the control of its data base management programme DBMP, detects the presence of B2 following a message UI or a communication path set-up message SETUP wherein B2 is the device generating this message or the destination device. To be noted that due to the data base containing no information on the newly connected device an above mentioned discrepancy will always be detected. Thereafter the node N2 creates a combined user/device object UDOB storing the location L3 and user/device object data UDODB. Finally, the node N2 informs the other nodes of the new user/device object and in response thereat these nodes adapt their data base to the new situation.

It is clear that by combining user and device objects in one single object, i.e. when no difference is made between a user and a device, these objects are no longer separate ones so that one looses the flexibility mentioned above. But in a similar way as described above the system automatically updates its data bases when the location of a device is changed. On the other hand, separate user and device objects may easily be created from a combined user/device object by an operator.

## Claims

1. Communication system including a switching network (SNN1/3) with a plurality of terminals (L1/3) to which communication devices (A1/2, B1/2), at the availability of users (A/B), amy be connected, and control means (COMPN1/3) which are able to control the establishment of connections between said devices (A1/2, B1/2) and to store in a data base (DBN1/3) information linking and to identity (A/B) with a network terminal identity (L1/3), characterized in that said devices (A1/2, B1/2) each have an own identity and that said control means (COMPN1/3) are able to store in said data base (DBN1/3) information (DOA1/2, DOB1/2) linking the identity of a device directly to a terminal identity (L1/3) and to adapt said information to a modified location of said device (D2).

2. Communication system according to claim 1, characterized in that said control means (COMPN1/3) are able to store in said data base (DBN1/3) second information (UOA/B) linking a user identity (A/B) directly with at least one device identity (A1/2, B1/2).

3. Communication system according to claim 1, characterized in that said control means (COMPN1/3) include detection means (DBMP) to derive third information (B2/L4N3; B2/L3/N2 not) from a network terminal (L4; L3) and to collect corresponding first information (B2/L4N2; B2/L3/N2) from said data base (DBN2; DBN3) and to compare these information, a detected discrepancy indicating a change of location of at least one of devices of the system and giving rise to an alteration of said information (DOA1/2, DOB1/2) to the changed location by said detection means (DBMP).

4.Communication system according to claim 3, characterized in that each device (B2) is able to trasmit on the lin (L4) coupling it to its network terminal on the message (UI; SETUP) containing the own device identity (2), said control means (DBMP) collecting said third information (B2/L4/N3) upon receipt of said first message (UI, SETUP) from said device, and that said detection means when detecting a discrepancy between said third information (B2/L4/N3) and said first information (B2/L3/N2) stored in said data base (DBN2) indicate a change of position of said message transmitting device (B2).

5. Communication system according to claim 3, characterized in that said control means are able to transmit a second message (SETUP) including the identity (B2) of a destination device (B2) on the line (L3) which according to said first information (B2/L3/N2) stored in said data base (DBN2) couples said network to said destination device (B2), said third information (B2, L3, N2) being provided by a device replying to said second message or not, and that the absence of reply indicates that the location of said destination device (B2) has been changed, whilst a replying device indicates that it is the destination device (B2).

6. Communication system according to claim 5, characterized in that said detection means (DBMP) subsequent to the detection of a change of location of said destination device (B2) start searching for said destination device, on all lines of the system.

7. Communication system according to claim 4, characterized in that said first message (UI) is generated by said message transmitting device (B2) after said device has been newly connected to said network.

8. Communication system according to claim 4, characterized in that said first message (SETUP) is a communication path set up message which is generated by said message transmitting device after said device has been newly connected to said network and when a communication paht has to be established from said message transmitting device to a destination device.

9. Communication system according to claim 5 and 8, characterized in that said second message (SETUP) is transmitted by said message transmitting control means after the receipt of said first message.

10. Communication system according to claim 1, characterized in that said first mentioned information (DOA1/2) also include characteristics (DODA1/2) of said device.

11. Communication system according to claim 2, characterized in that said second information links a user identity (A/B) with a plurality of device identities A1/2, B1/2).

12. Communication system according to claim 11, characterized in that said second information also indicates the services (S1/2) offered by said devices (A1/2)to the user (A) whose identity is stored in said second storage means.

13. Communication system according to claim 8, characterized in that each of said user (A) is able to operate a device (A1/2) assigned to it in such a way that said device then generate said communication path setup message (SETUP) which includes the identity of said message generating device (A1), the identity of a destination user (B) and a service wanted (S1/2).

14. Communication system according to claim 13, characterized in that when a said control means receive said communication path setup message (SETUP) they first consult the first information relating to said message generating device (A1) and transform said communication path setup message into a third message by substituting therein the user identity (A) for said message generating device identity (A1).

15. Communication system according to claim 14, characterized in that said control means receiving said thrid message consult said second information relating to said user identity (B) and transform said third message into said second message by substituting therein the destinaion identity (B2), for the destination user identity (B).

**Patentansprüche**

1. Kommunikationssystem, enthaltend eine Koppeleinrichtung (SNN1/3) mit einer Vielzahl von Anschlüssen (L1/3), an die Kommunikationsgeräte (A1/2, B1/2) nach Wahl der Benutzer (A/B) angeschlossen werden können, und weiter enthaltend Steuerungen (COMPN1/3), die in der Lage sind, den Aufbau von Verbindungen zwischen den Geräten (A1/2, B1/2) zu steuern und in einer Datenbank (DBN1/3) eine Information zu speichern, durch die eine Benutzerkennung (A/B) mit einer Netzanschlußkennung (L1/3) verknüpft wird, **dadurch gekennzeichnet** , daß jedes dieser Geräte (A1/2, B1/2) seine eigene Kennung aufweist und daß die Steuerungen (COMPN1/3) in der Lage sind, in der Datenbank (DBN1/3) eine Information (DOA1/2, DOB1/2) zu speichern, durch die die Kennung eines Geräts direkt mit einer Anschlußkennung (L1/3) verknüpft wird und die Information für eine geänderte Lage des Geräts (B2) zu übernehmen.

2. Kommunikationssystem nach Anspruch 1, dadurch gekennzeichnet, daß die Steuerungen (COMPN1/3) in der Lage sind, in der Datenbank (DBN1/3) eine zweite Information (UOA/B) zu speichern, durch die eine Benutzerkennung (A/B) direkt mit mindestens einer Gerätekennung (A1/2, B1/2) verknüpft wird.

3. Kommunikationssystem nach Anspruch 1, dadurch gekennzeichnet, daß die Steuerungen (COMPN1/3) einen Detektor (DBMP) enthalten, um eine dritte Information (B2/L4/N3; B2/L3/N2 not) von einem Netzanschluß (L4; L3) abzuleiten und eine dazugehörige erste Information (B2/L4/N2; B2/L3/N2) von der Datenbank (DBN2; DBN3) abzurufen und diese Informationen zu vergleichen, und daß ein beim Vergleich entdeckter Unterschied eine Lageänderung mindestens eines der Geräte des Systems anzeigt und durch die Detektoren (DBMP) die Änderung der Information entsprechend der geänderten Lage veranlaßt.

4. Kommunikationssystem nach Anspruch 3, dadurch gekennzeichnet, daß jedes Gerät (B2) in der Lage ist, über die Leitung (L4), durch die es mit seinem Netzanschluß verbunden ist, eine erste Meldung (UI; SETUP) zu senden, die die eigene Gerätekennung (B2) enthält, daß die Steuerungen (DBMP) die dritte Information (B2/L4/N3) nach Empfang der ersten Meldung (UI, SETUP) vom Gerät abruft, und daß der Detektor dann eine Positiönsveränderung des die Meldung sendenden Geräts (B2) anzeigt, wenn ein Unterschied entdeckt wird zwischen der dritten Information (B2/L4/N3) und der ersten Information (B2/L3/N2), die in der Datenbank (DBN2) gespeichert sind.

5. Kommunikationssystem nach Anspruch 3, dadurch gekennzeichnet, daß die Steuerungen in der Lage sind, eine zweite Meldung (SETUP) einschließlich der Kennung (B2) eines Zielgeräts (B2) über die Leitung (L3) zu senden, die gemäß der in der Datenbank (DBN2) gespeicherten ersten Information (B2/L3/N2) die Koppeleinrichtung mit dem Zielgerät (B2) verbindet, daß die dritte Information (B2/L3/N2) von einem Gerät ausgeht, das auf die zweite Meldung antwortet oder nicht und daß das Nichtauftreten einer Antwort anzeigt, daß die Lage des Zielgeräts (B2) geändert wurde, während ein antwortendes Gerät anzeigt, daß es das Zielgerät (B2) ist.

6. Kommunikationssystem nach Anspruch 5, dadurch gekennzeichnet, daß der Detektor (DBMP) auf allen Leitungen des Systems nach dem Zielgerät zu suchen beginnt, wenn er eine Änderung der Lage des Zielgeräts (B2) entdeckt hat.

7. Kommunikationssystem nach Anspruch 4, dadurch gekennzeichnet, daß die erste Meldung (UI) in dem die Meldung sendenden Gerät (B2) erzeugt wird, nachdem dieses Gerät neu mit der Koppeleinrichtung verbunden wurde.

8. Kommunikationssystem nach Anspruch 4, dadurch gekennzeichnet, daß die erste Meldung (SETUP) eine Meldung zum Aufbau eines Verbindungswegs ist, die in dem die Meldung sendenden Gerät erzeugt wird, nachdem dieses Gerät neu mit der Koppeleinrichtung verbunden wurde und von dem die Meldung sendenden Gerät ein Verbindungsweg zu einem Zielgerät aufgebaut werden soll.

9. Kommunikationssystem nach den Ansprüchen 5 und 8, dadurch gekennzeichnet, daß die zweite Meldung (SETUP) nach Empfang der ersten Meldung durch die Steuerungen gesendet wird, die in der Lage sind, eine Meldung zu senden.

10. Kommunikationssystem nach Anspruch 1, dadurch gekennzeichnet, daß die zuerst genannte Information (DOA1/2) auch Kennzeichen (DODA1/2) des Geräts enthält.

11. Kommunikationssystem nach Anspruch 2, dadurch gekennzeichnet, daß die zweite Information eine Benutzerkennung (A/B) mit einer Vielzahl von Gerätekennungen (A1/2, B1/2) verknüpft.

12. Kommunikationssystem nach Anspruch 11, dadurch gekennzeichnet, daß die zweite Information auch die Dienste (S1/2) enthält, die die Geräte (A1/2) dem Benutzer bieten, dessen Kennung in dem zweiten Speicher gespeichert ist.

13. Kommunikationssystem nach Anspruch 8, dadurch gekennzeichnet, daß der Benutzer (A) in der Lage ist, ein ihm zugeordnetes Gerät (A1/2) derart zu betreiben, daß das Gerät dann die Meldung (SETUP) zum Aufbau eines Verbindungswegs erzeugt, die die Kennung des die Meldung sendenden Geräts (A1), die Kennung eines Zielteilnehmers (B) und einen gewünschten Dienst (S1/2) enthält.

14. Kommunikationssystem nach Anspruch 13, dadurch gekennzeichnet, daß, wenn eine der Steuerungen die Meldung (SETUP) zum Aufbau eines Verbindungswegs empfängt, diese Steuerung zuerst die erste, das die Meldung erzeugende Gerät betreffende Information berücksichtigt und die Meldung zum Aufbau eines Verbindungswegs in eine dritte Meldung umformt, indem sie darin die Benutzerkennung (A) durch die Kennung (A1) des die Meldung erzeugenden Geräts ersetzt.

15. Kommunikationssystem nach Anspruch 14, dadurch gekennzeichnet, daß die Steuerung, die die dritte Meldung empfängt, die zweite Information berücksichtigt, die die Bneutzerkennung (B) betrifft und die dritte Meldung in die zweite Meldung umformt, indem sie darin die Kennung (B2) des Ziels durch die Benutzerkennung (B) des Ziels ersetzt.

## Revendications

1. Système de communication comprenant un réseau de connexion (SNN1/3) muni d'une pluralité de terminaux (L1/3) auxquels des dispositifs de communication (A1/2, B1/2), à la disposition d'utilisateurs (A/B) peuvent être raccordés, et des moyens de commandes (COMPN1/3) susceptibles de commander l'établissement de connexions entre lesdits dispositifs (A1/2, B1/2) et de stocker dans une base de données (DBN1/3) des informations établissant une liaison entre une identité d'utilisateur (A/B) et une identité de terminal du réseau (L1/3), caractérisé en ce que lesdits dispositifs (A1/2, B1/2) présentent chacun une identité propre et en ce que lesdits moyens de commande (COMPN1/3) sont aptes à stocker dans ladite base de données (DBN1/3) des informations (DOA1/2, DOB1/2) établissant une relation directe entre l'identité d'un dispositif et l'identité d'un terminal (L1/3) et à adapter lesdites informations à une localisation modifiée dudit dispositif (D2).

2. Système de communication selon la revendication 1, caractérisé en ce que lesdits moyens de commande (COMPN1/3) sont aptes à stocker dans ladite base de données (DBN1/3) une deuxième information (UOA/B) qui lie directement une identité d'utilisateur (A/B) à au moins une identité de dispositif (A1/2, B1/2).

3. Système de communication selon la revendication 1, caractérisé en ce que lesdits moyens de commande (COMPN1/3) comportent des moyens de détection (DBMP) afin de dériver une troisième information (B2/L4/N3; B2/L3/N2) d'un terminal de réseau (L4; L3) et pour réaliser l'acquisition d'une première information correspondante (B2/L4/N2; B2/L3/N2) de ladite base de données (DBN2; DBN3) et pour comparer ces informations, une disconcordance détectée indiquant un changement de localisation d'au moins un des dispositifs du système et donnant lieu à une altération par lesdits moyens de détection (DBMP) de ladite information (DOA1/2, DOB1/2) en correspondance au changement de localisation.

4. Système de communication selon la revendication 3, caractérisé en ce que chaque dispositif (B2) est capable d'émettre sur la ligne (L4) qui le raccorde à son terminal du réseau un premier message (UI; SETUP) qui contient l'identité propre du dispositif (2), lesdits moyens de commande (DBMP) réalisant l'acquisition de ladite troisième information (B2/L4/N3) à la réception dudit premier message (UI, SETUP) à partir dudit dispositif, et en ce que lesdits moyens de détection, lors de la détection d'une discordance entre ladite troisième information (B2/L4/N3) et ladite première information (B2/L3/N2) stockée dans ladite base de données (DBN2), indiquent un changement de position dudit dispositif (D2) transmettant des messages.

5. Système de communication selon la revendication 3, caractérisé en ce que lesdits moyens de commande sont capables de transmettre un deuxième message (SETUP) qui comporte l'identité (B2) d'un dispositif destinataire (B2) sur la ligne (L3) qui, selon ladite première information (B2/L3/N2) stockée dans ladite base de donnée (DBN2), réalise l'accouplement dudit réseau et dudit dispositif destinataire (B2), ladite troisième information (B2, L3, N2) étant fournie par un dispositif qui répond ou non, audit deuxième message, et en ce que l'absence d'une réponse indique que la localisation dudit dispositif destinataire (B2) a changé tandis qu'une réponse d'un dispositif indique que ce dispositif est le dispositif destinataire (B2).

6. Système de communication selon la revendication 5, caractérisé en ce que lesdits moyens de détection (DBMP), à la suite de la détection d'un changement de localisation dudit dispositif destinataire (B2) lancent une recherche sur toutes les lignes du système afin de trouver ledit dispositif destinataire.

7. Système de communication selon la revendication 4, caractérisé en ce que ledit premier message (UI) est émis par ledit dispositif (B2) qui émet des messages après un nouveau raccordement dudit dispositif au réseau.

8. Système de communication selon la revendication 4, caractérisé en ce que ledit premier message (SETUP) est un message d'établissement de trajet de communication qui est émis par ledit dispositif qui émet des messages après un nouveau raccordement dudit dispositif audit réseau et quand il est nécessaire d'établir un trajet de communication à partir dudit dispositif qui émet des messages vers un dispositif destinataire.

9. Système de communication selon les revendications 5 et 8, caractérisé en ce que ledit deuxième message (SETUP) est transmis par lesdits moyens de commande de la transmission de message, après réception dudit premier message.

10. Système de communication selon la revendication 1, caractérisé en ce que ladite première information (DOA1/2) mentionnée, comporte également des caractéristiques (DODA1/2) dudit dispositif.

11. Système de communication selon la revendication 2, caractérisé en ce que ladite deuxième information établit la liaison entre une identité d'utilisateurs (A/B) et une pluralité d'identités de dispositif (A1/2, B1/2).

12. Système de communication selon la revendication 11, caractérisé en ce que ladite deuxième information indique également le service (S1/2) qui est offert à l'utilisateur (A) dont l'identité est stockée dans lesdits moyens de stockage, par ledit dispositif (A1/2).

13. Système de communication selon la revendication 8, caractérisé en ce que chacun desdits utilisateurs (A) est capable de faire fonctionner un dispositif (A1/2) qui lui est affecté de telle manière que ledit dispositif génère ensuite ledit message d'établissement de trajet de communication (SETUP) qui comporte l'identité dudit dispositif (A1) qui émet des messages, l'identité d'un utilisateur destinataire (B) et l'identification d'un service demandé (S1/2).

14. Système de communication selon la revendication 13, caractérisé en ce que quand lesdits moyens de commande reçoivent ledit message d'établissement de trajet de communication, ils consultent d'abord ladite première information qui concerne ledit dispositif (A1) qui émet des messages, et réalisent la transformation dudit message d'établissement de trajet de communication en un troisième message en y substituant l'identité (A) de l'utilisateur à l'identité (A1) du dispositif qui émet des messages.

15. Système de communication selon la revendication 14, caractérisé en ce que lesdits moyens de commande qui reçoivent ledit troisième message consultent ladite deuxième information relative à l'identité de l'utilisateur (B) et réalisent la transformation dudit troisième message en ledit deuxième message en remplaçant l'identité de l'utilisateur destinataire (B) par l'identité de destination (B2).

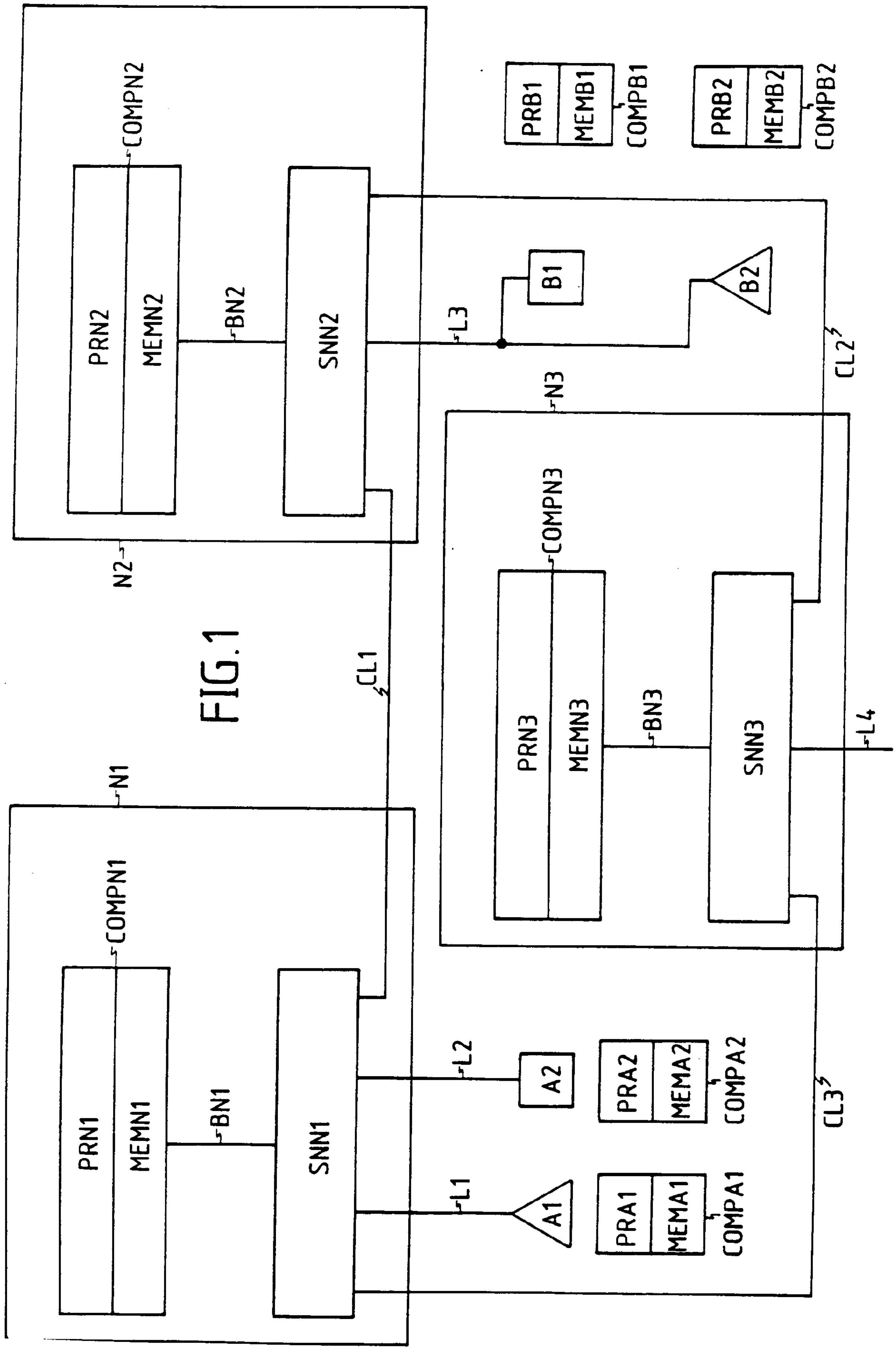
N1
N2
N3
COMPN1
COMPN2
COMPN3
PRN1
MEMN1
PRN2
MEMN2
PRN3
MEMN3
BN1
BN2
BN3
SNN1
SNN2
SNN3
CL1
CL2
CL3
L1
L2
L3
L4
A1
A2
B1
B2
PRA1
MEMA1
COMPA1
PRA2
MEMA2
COMPA2
PRB1
MEMB1
COMPB1
PRB2
MEMB2
COMPB2

FIG.1

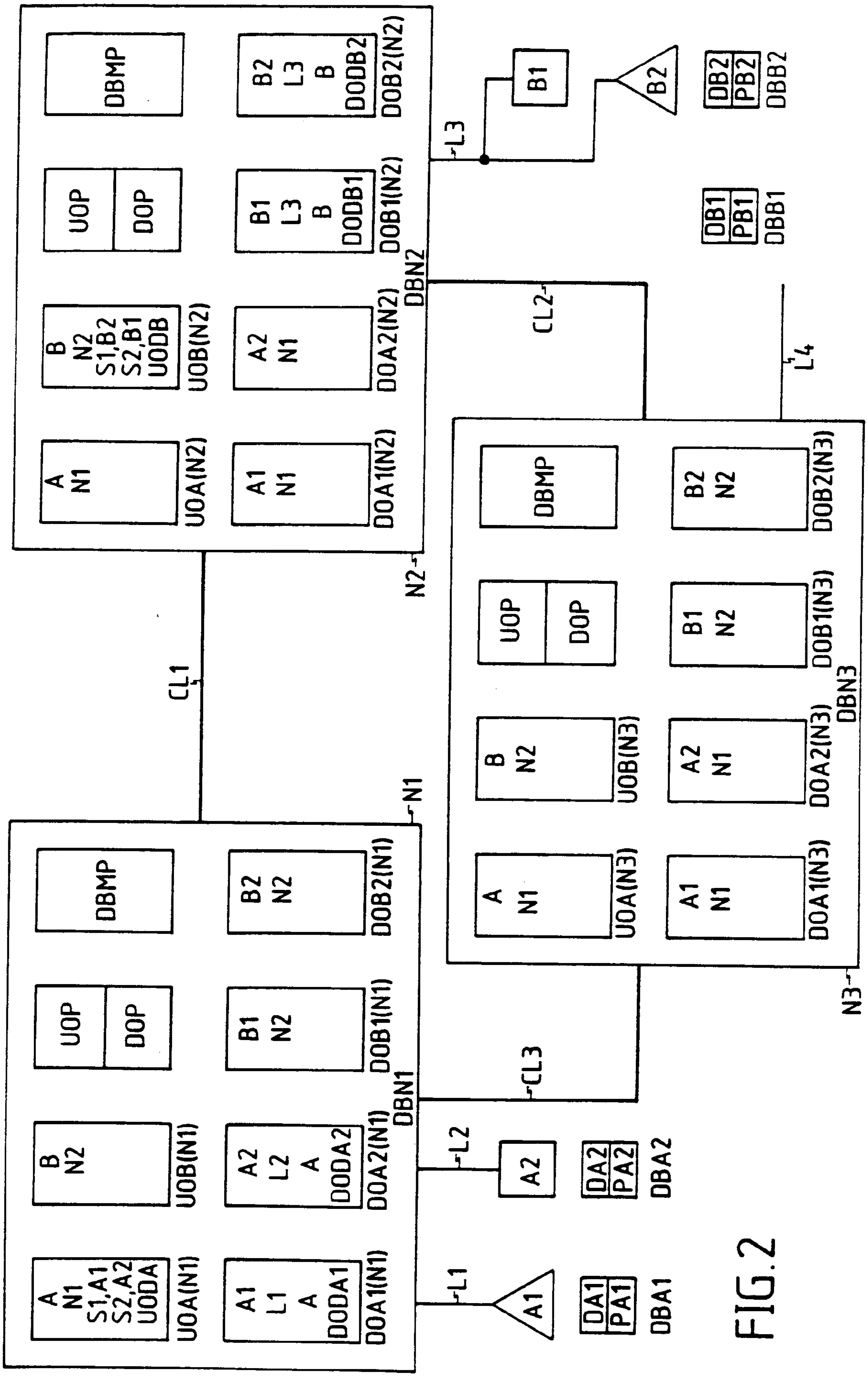

DBMP
UOP
DOP
B
N2
S1,B2
S2,B1
UODB
UOB(N2)
A
N1
UOA(N2)
B2
L3
B
DODB2
DOB2(N2)
B1
L3
B
DODB1
DOB1(N2)
A2
N1
DOA2(N2)
DBN2
A1
N1
DOA1(N2)
N2
L3
B1
B2
DB2
PB2
DBB2
DB1
PB1
DBB1
CL2
L4
CL1
DBMP
UOP
DOP
B
N2
UOB(N3)
A
N1
UOA(N3)
B2
N2
DOB2(N3)
B1
N2
DOB1(N3)
A2
N1
DOA2(N3)
DBN3
A1
N1
DOA1(N3)
N3
N1
DBMP
UOP
DOP
B
N2
UOB(N1)
A
N1
S1,A1
S2,A2
UODA
UOA(N1)
B2
N2
DOB2(N1)
B1
N2
DOB1(N1)
A2
L2
A
DODA2
DOA2(N1)
DBN1
A1
L1
A
DODA1
DOA1(N1)
CL3
L2
A2
DA2
PA2
DBA2
L1
A1
DA1
PA1
DBA1


FIG.2

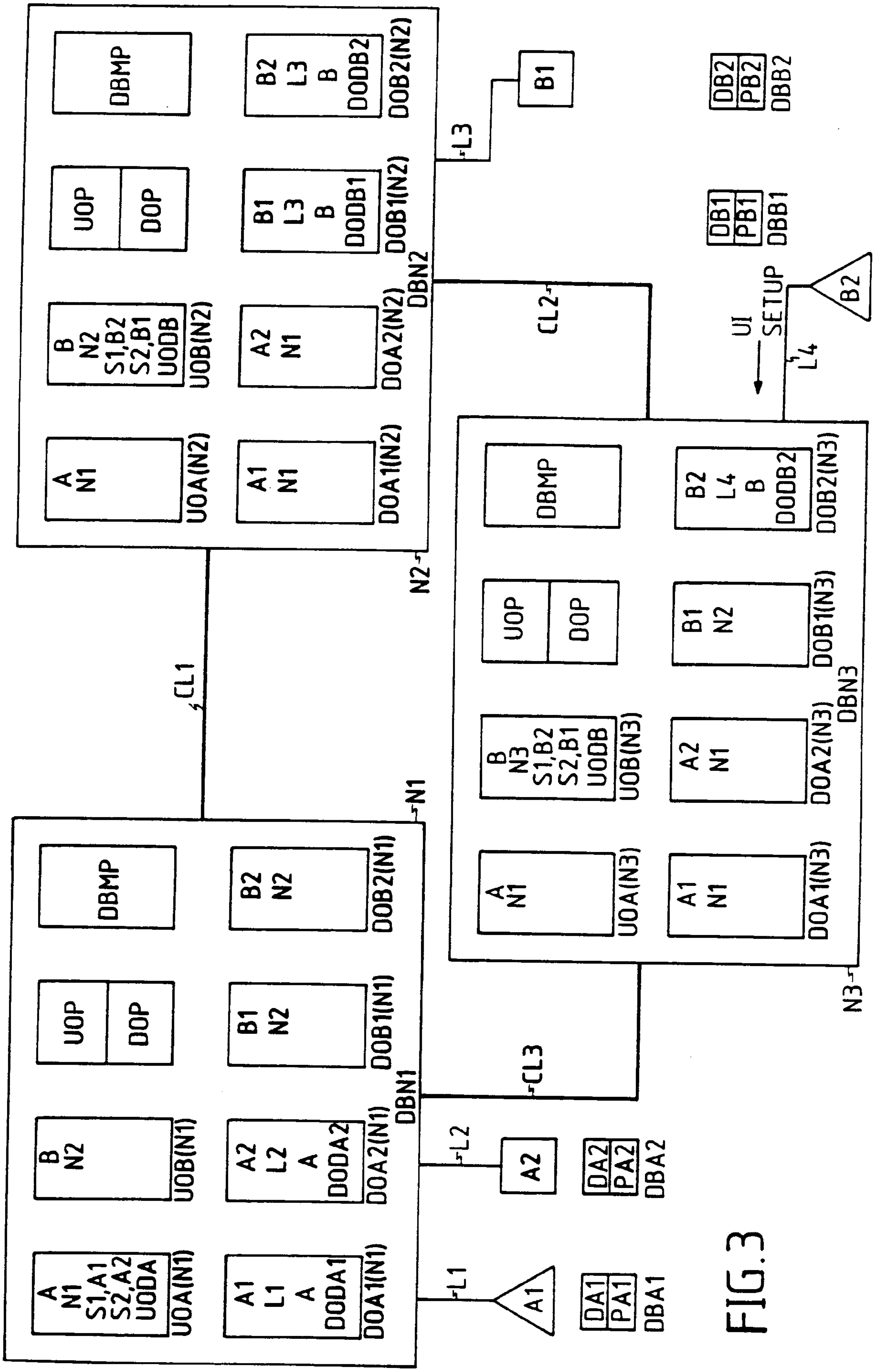

DBMP
UOP
DOP
B2 L3 B DODB2
DOB2(N2)
B1 L3 B DODB1
DOB1(N2)
B N2 S1,B2 S2,B1 UODB
UOB(N2)
A2 N1
DOA2(N2)
DBN2
A N1
UOA(N2)
A1 N1
DOA1(N2)
N2
L3
B1
CL2
DB2 PB2
DBB2
DB1 PB1
DBB1
SETUP
UI
L4
B2
CL1
N1
DBMP
UOP
DOP
B2 N2
DOB2(N1)
B1 N2
DOB1(N1)
B N2
UOB(N1)
A2 L2 A DODA2
DOA2(N1)
DBN1
A N1 S1,A1 S2,A2 UODA
UOA(N1)
A1 L1 A DODA1
DOA1(N1)
CL3
L2
A2
DA2 PA2
DBA2
L1
A1
DA1 PA1
DBA1
DBMP
UOP
DOP
B2 L4 B DODB2
DOB2(N3)
B1 N2
DOB1(N3)
DBN3
B N3 S1,B2 S2,B1 UODB
UOB(N3)
A2 N1
DOA2(N3)
A N1
UOA(N3)
A1 N1
DOA1(N3)
N3


FIG.3

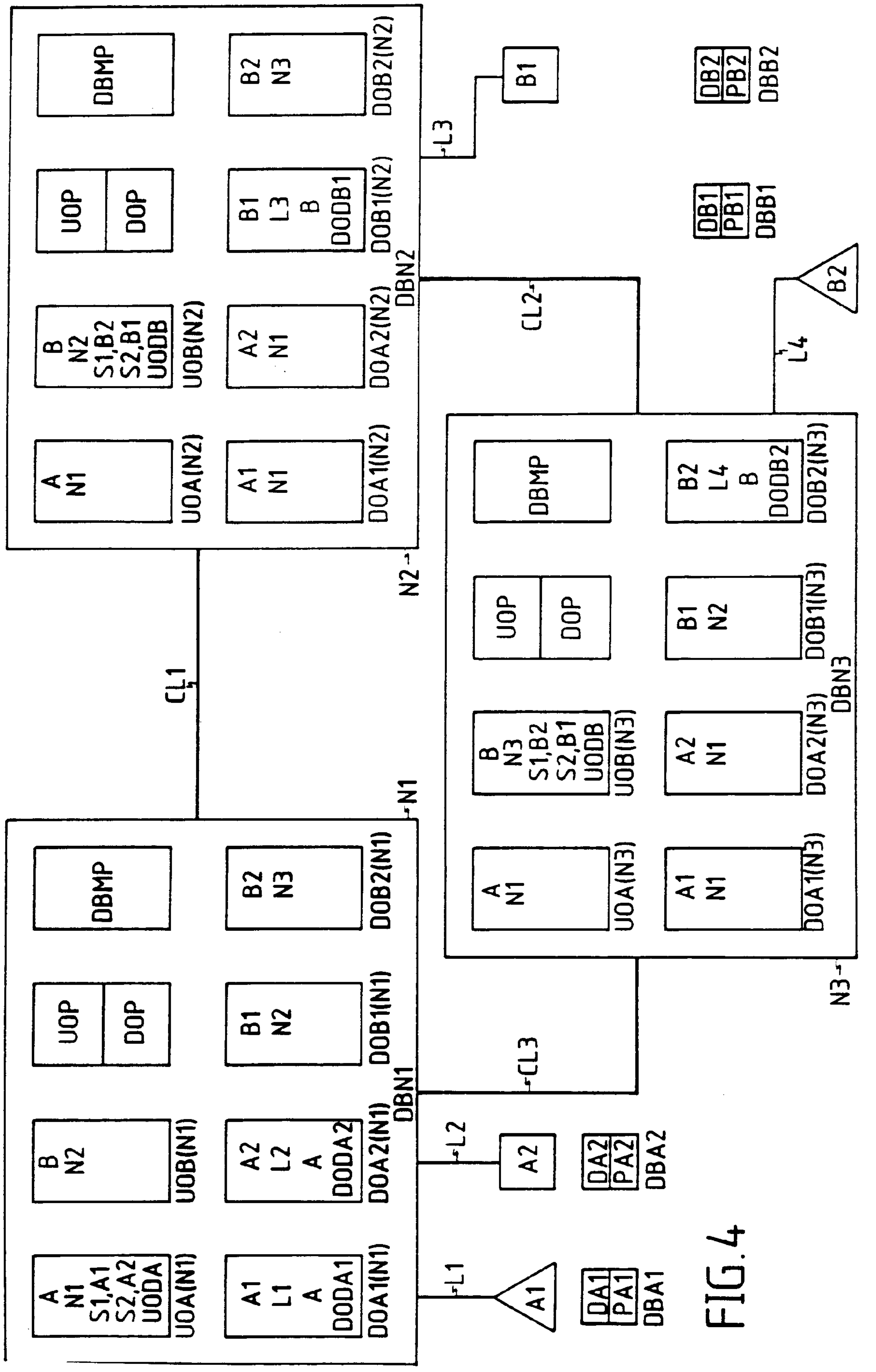

N1
N2
N3
CL1
CL2
CL3
L1
L2
L3
L4
A1
A2
B1
B2
UOA(N1)
UOB(N1)
DOA1(N1)
DOA2(N1)
DOB1(N1)
DOB2(N1)
DBN1
UOA(N2)
UOB(N2)
DOA1(N2)
DOA2(N2)
DOB1(N2)
DOB2(N2)
DBN2
UOA(N3)
UOB(N3)
DOA1(N3)
DOA2(N3)
DOB1(N3)
DOB2(N3)
DBN3
UOP
DOP
DBMP
UODA
UODB
DODA1
DODA2
DODB1
DODB2
DA1
PA1
DBA1
DA2
PA2
DBA2
DB1
PB1
DBB1
DB2
PB2
DBB2
S1,A1
S2,A2
S1,B2
S2,B1


FIG. 4

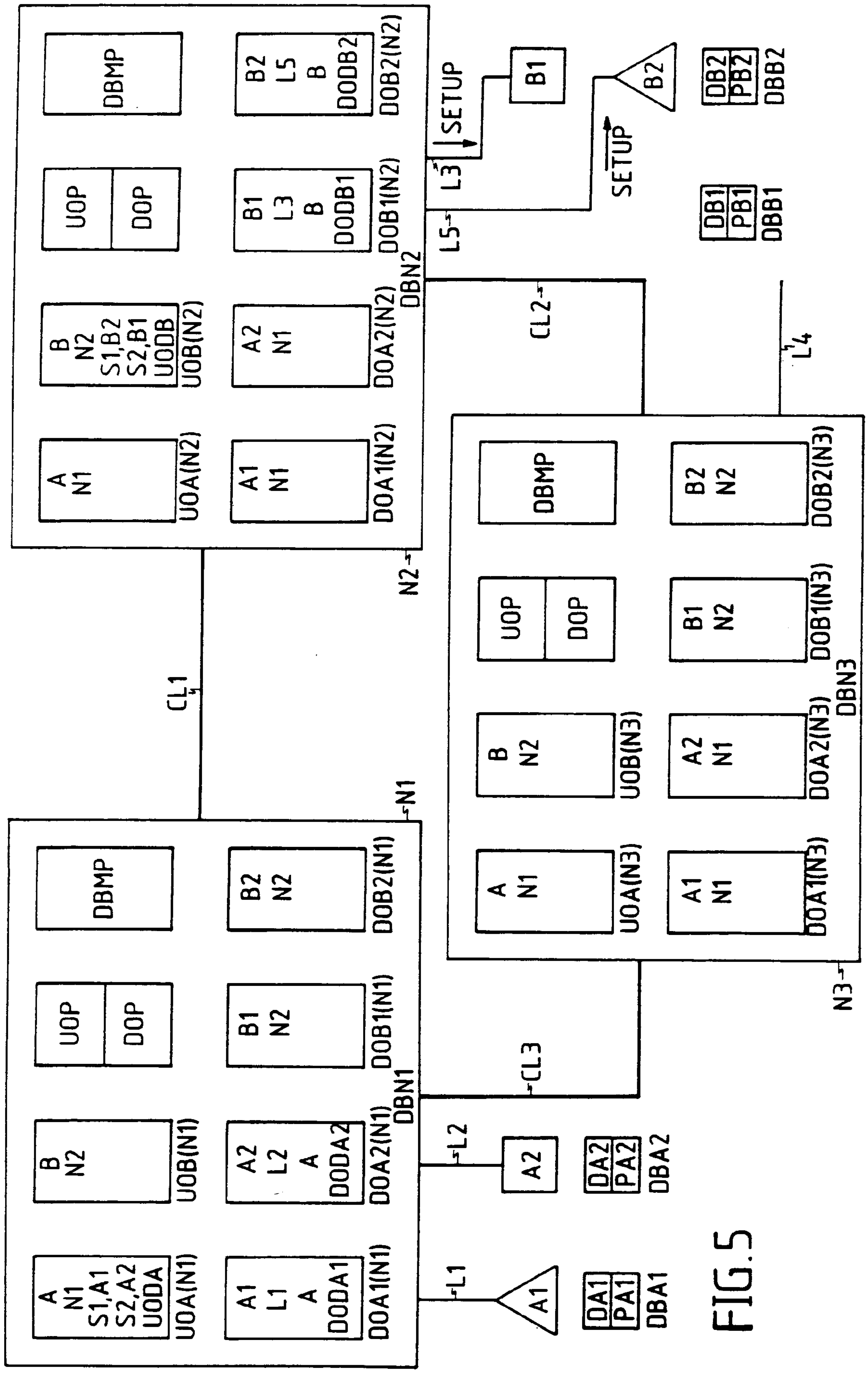
DBMP
UOP
DOP
A
N1
S1,A1
S2,A2
UODA
UOA(N1)
A1
L1
A
DODA1
DOA1(N1)
B
N2
UOB(N1)
A2
L2
A
DODA2
DOA2(N1)
B1
N2
DOB1(N1)
B2
N2
DOB2(N1)
DBN1
N1
L1
L2
A1
A2
DA1
PA1
DBA1
DA2
PA2
DBA2
CL1
CL2
CL3
N2
A
N1
UOA(N2)
A1
N1
DOA1(N2)
B
N2
S1,B2
S2,B1
UODB
UOB(N2)
A2
N1
DOA2(N2)
DBN2
B1
L3
B
DODB1
DOB1(N2)
B2
L5
B
DODB2
DOB2(N2)
L3
L5
SETUP
SETUP
B1
B2
DB1
PB1
DBB1
DB2
PB2
DBB2
L4
N3
A
N1
UOA(N3)
A1
N1
DOA1(N3)
B
N2
UOB(N3)
A2
N1
DOA2(N3)
DBN3
B1
N2
DOB1(N3)
B2
N2
DOB2(N3)

FIG.5

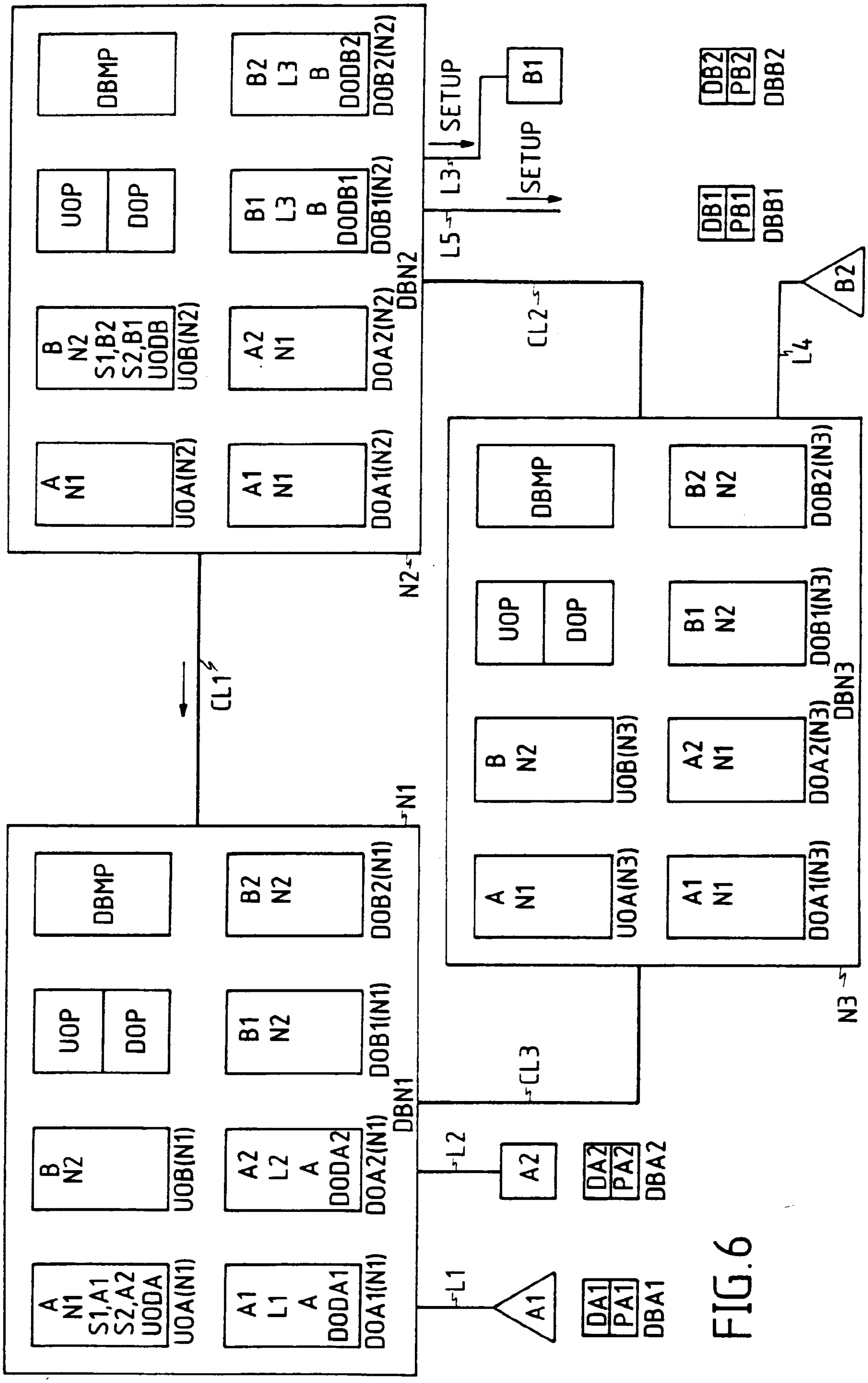

N1
N2
N3
DBMP
UOP
DOP
A N1 S1,A1 S2,A2 UODA
UOA(N1)
B N2
UOB(N1)
B1 N2
DOB1(N1)
B2 N2
DOB2(N1)
A1 L1 A DODA1
DOA1(N1)
A2 L2 A DODA2
DOA2(N1)
DBN1
A N1
UOA(N2)
B N2 S1,B2 S2,B1 UODB
UOB(N2)
A1 N1
DOA1(N2)
A2 N1
DOA2(N2)
B1 L3 B DODB1
DOB1(N2)
B2 L3 B DODB2
DOB2(N2)
DBN2
A N1
UOA(N3)
B N2
UOB(N3)
A1 N1
DOA1(N3)
A2 N1
DOA2(N3)
B1 N2
DOB1(N3)
B2 N2
DOB2(N3)
DBN3
CL1
CL2
CL3
L1
L2
L3
L4
L5
SETUP
SETUP
A1
A2
B1
B2
DA1 PA1
DBA1
DA2 PA2
DBA2
DB1 PB1
DBB1
DB2 PB2
DBB2


FIG.6

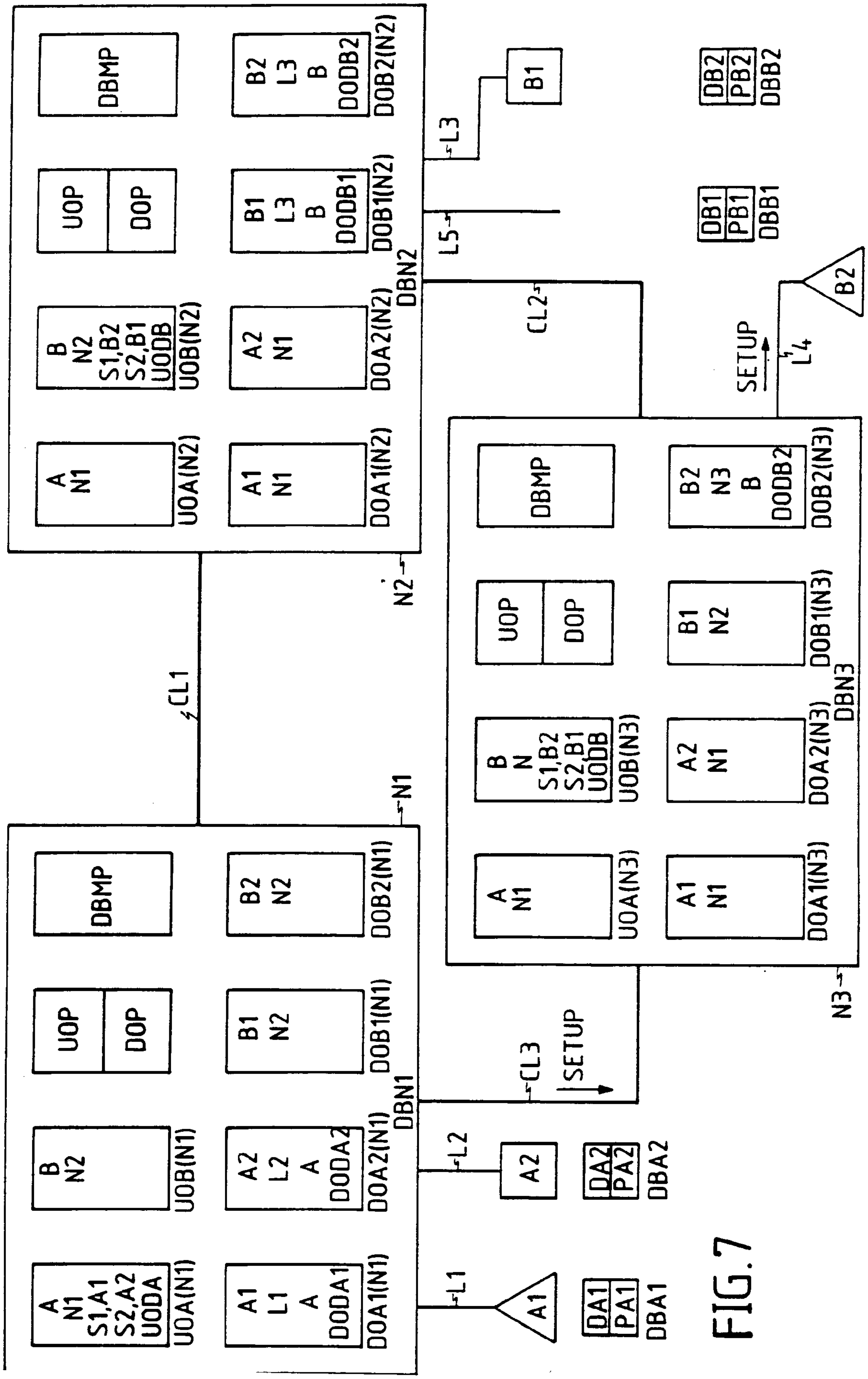
DBMP
UOP
DOP
B
N2
S1,B2
S2,B1
UODB
UOB(N2)
A
N1
UOA(N2)
B2
L3
B
DODB2
DOB2(N2)
B1
L3
B
DODB1
DOB1(N2)
A2
N1
DOA2(N2)
DBN2
A1
N1
DOA1(N2)
N2
L3
B1
L5
CL2
CL1
DB2
PB2
DBB2
DB1
PB1
DBB1
B2
SETUP
L4
DBMP
UOP
DOP
B2
N3
B
DODB2
DOB2(N3)
B1
N2
DOB1(N3)
DBN3
B
N
S1,B2
S2,B1
UODB
UOB(N3)
A2
N1
DOA2(N3)
A
N1
UOA(N3)
A1
N1
DOA1(N3)
N3
N1
DBMP
B2
N2
DOB2(N1)
UOP
DOP
B1
N2
DOB1(N1)
CL3
SETUP
DBN1
B
N2
UOB(N1)
A2
L2
A
DODA2
DOA2(N1)
L2
A2
DA2
PA2
DBA2
A
N1
S1,A1
S2,A2
UODA
UOA(N1)
A1
L1
A
DODA1
DOA1(N1)
L1
A1
DA1
PA1
DBA1

FIG.7

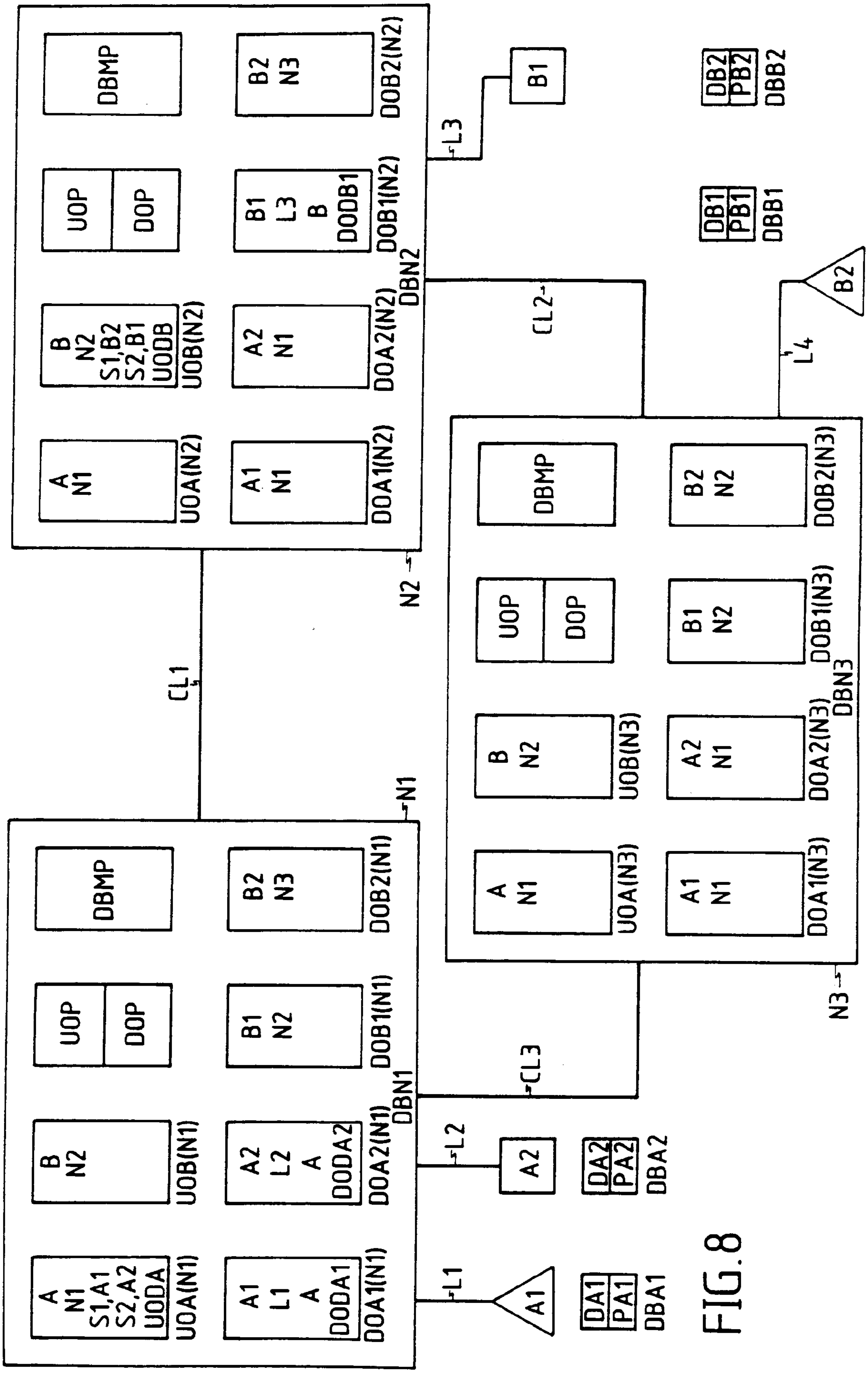
DBMP
UOP
DOP
B
N2
S1,B2
S2,B1
UODB
UOB(N2)
A
N1
UOA(N2)
B2
N3
DOB2(N2)
B1
L3
B
DODB1
DOB1(N2)
DBN2
A2
N1
DOA2(N2)
A1
N1
DOA1(N2)
N2
L3
B1
CL2
DB2
PB2
DBB2
DB1
PB1
DBB1
B2
L4
CL1
N1
A
N1
S1,A1
S2,A2
UODA
UOA(N1)
B
N2
UOB(N1)
B2
N3
DOB2(N1)
B1
N2
DOB1(N1)
DBN1
A2
L2
A
DODA2
DOA2(N1)
A1
L1
A
DODA1
DOA1(N1)
L1
A1
L2
A2
DA2
PA2
DBA2
DA1
PA1
DBA1
CL3
UOA(N3)
UOB(N3)
DOA1(N3)
DOA2(N3)
DBN3
DOB1(N3)
DOB2(N3)
N3

FIG.8

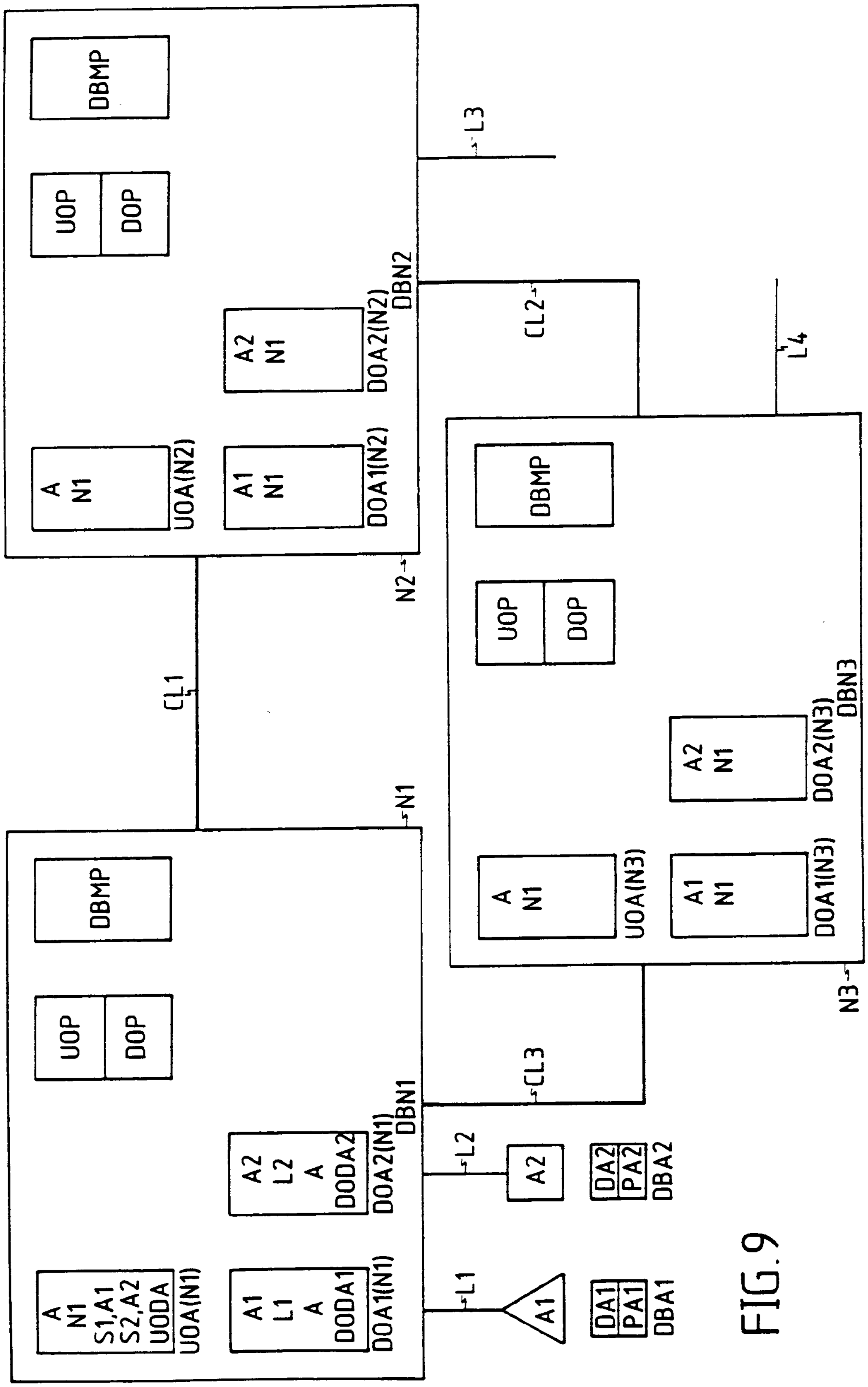
DBMP
UOP
DOP
A
N1
UOA(N2)
A1
N1
DOA1(N2)
A2
N1
DOA2(N2)
DBN2
L3
CL2
L4
N2
CL1
N1
DBMP
UOP
DOP
A
N1
UOA(N3)
A1
N1
DOA1(N3)
A2
N1
DOA2(N3)
DBN3
N3
DBMP
UOP
DOP
A
N1
S1,A1
S2,A2
UODA
UOA(N1)
A1
L1
A
DODA1
DOA1(N1)
A2
L2
A
DODA2
DOA2(N1)
DBN1
CL3
L2
A2
DA2
PA2
DBA2
L1
A1
DA1
PA1
DBA1

FIG.9

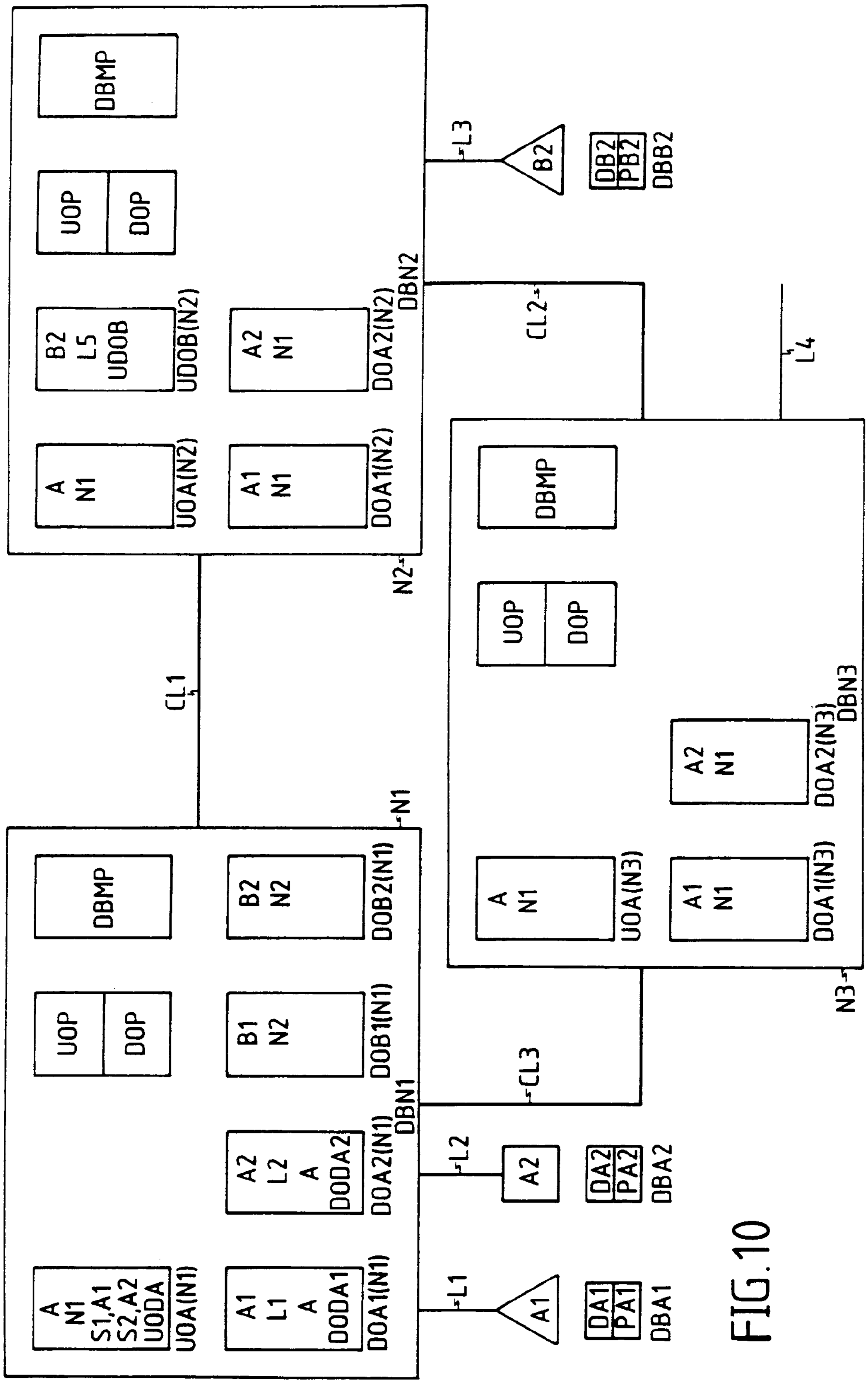
DBMP
UOP
DOP
B2 L5 UDOB
UDOB(N2)
A2 N1
DOA2(N2)
DBN2
A N1
UOA(N2)
A1 N1
DOA1(N2)
N2
L3
B2
DB2
PB2
DBB2
CL2
L4
CL1
N1
DBMP
UOP
DOP
B2 N2
DOB2(N1)
B1 N2
DOB1(N1)
DBN1
A2 L2 A DODA2
DOA2(N1)
A N1 S1,A1 S2,A2 UODA
UOA(N1)
A1 L1 A DODA1
DOA1(N1)
L1
A1
DA1
PA1
DBA1
L2
A2
DA2
PA2
DBA2
CL3
N3
DBMP
UOP
DOP
A2 N1
DOA2(N3)
DBN3
A N1
UOA(N3)
A1 N1
DOA1(N3)

FIG. 10

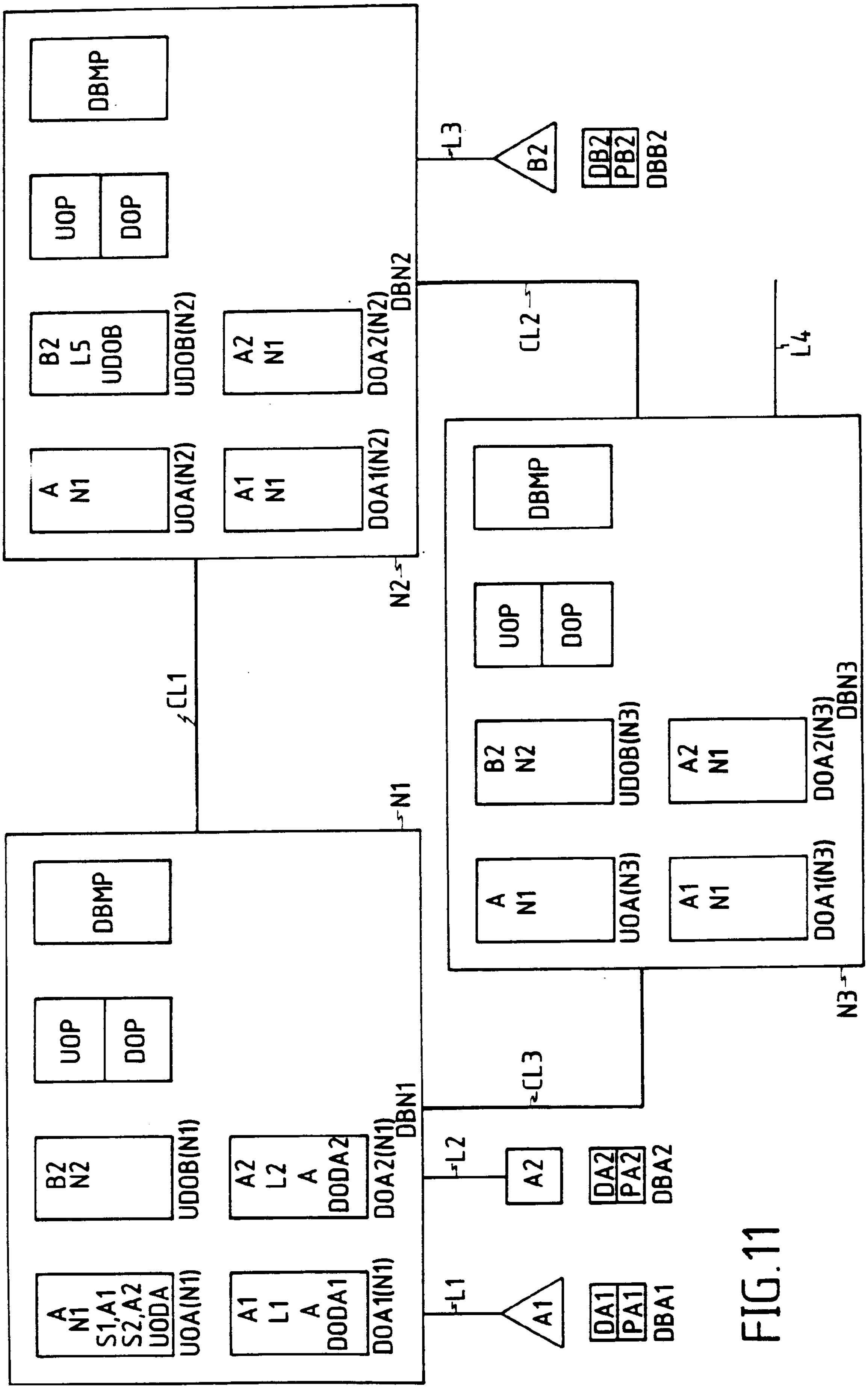
DBMP
UOP
DOP
B2 L5 UDOB
UDOB(N2)
A N1
UOA(N2)
A2 N1
DOA2(N2)
A1 N1
DOA1(N2)
DBN2
N2
L3
B2
DB2 PB2
DBB2
CL2
L4
CL1
N1
DBMP
UOP
DOP
B2 N2
UDOB(N3)
A2 N1
DOA2(N3)
DBN3
A N1
UOA(N3)
A1 N1
DOA1(N3)
N3
CL3
DBMP
UOP
DOP
B2 N2
UDOB(N1)
A2 L2 A DODA2
DOA2(N1)
DBN1
L2
A2
DA2 PA2
DBA2
A N1 S1,A1 S2,A2 UODA
UOA(N1)
A1 L1 A DODA1
DOA1(N1)
L1
A1
DA1 PA1
DBA1

FIG.11